# EUROPEAN PATENT SPECIFICATION

(11) **EP 3 227 109 B1**
(45) Date of publication and mention of the grant of the patent: **19.08.2020**
(21) Application number: 15864543.2
(22) Date of filing: 20.11.2015
(51) Int. Cl.: B32B 9/04, C04B 35/52, C04B 35/524, C04B 35/532, C09D 11/30, B33Y 70/00, B29C 64/165

(54) **PROCESS FOR MAKING DENSIFIED CARBON ARTICLES BY THREE DIMENSIONAL PRINTING**
VERFAHREN ZUR HERSTELLUNG VON VERDICHTETEN KOHLENSTOFFARTIKELN DURCH DREIDIMENSIONALES DRUCKEN
PROCÉDÉ DE FABRICATION D'ARTICLES DE CARBONE DENSIFIÉ PAR UNE IMPRESSION EN TROIS DIMENSIONS

(30) Priority: 03.12.2014 US 201462086905 P
(43) Date of publication of application: 11.10.2017
(73) Proprietor: The Exone Company, North Huntingdon, PA 15642 (US)
(72) Inventor: BLACKER, Jesse M., St. Clairsville, OH 43950 (US)
(74) Representative: Viering, Jentschura & Partner mbB Patent- und Rechtsanwälte
(86) International application number: PCT/US2015/061729
(87) International publication number: WO 2016/089618

(56) References cited:
- WO-A1-2009/017648
- WO-A1-2009/017648
- US-A- 5 270 280
- US-A- 6 036 777
- US-A1- 2009 047 561
- US-A1- 2010 018 815
- US-A1- 2010 018 815
- US-B2- 6 787 029
- JOOHO MOON ET AL: "Fabrication of functionally graded reaction infiltrated SiC-Si composite by three-dimensional printing (3DP(TM)) process", MATERIALS SCIENCE AND ENGINEERING: A, vol. 298, no. 1-2, 1 January 2001 (2001-01-01), pages 110-119, XP055272634, AMSTERDAM, NL ISSN: 0921-5093, DOI: 10.1016/S0921-5093(00)01282-X

## Description

### Background

Field of the Invention: The present invention relates to a process for making densified carbon articles by three-dimensional printing.

Background of the Art: Carbon is used to make components for use in many aerospace, chemical, power, and industrial applications. Conventionally, carbon based articles are made by machining a large block of carbon to the desired shape. This subtractive manufacturing method results in a significant amount of material loss in creating the article. Additionally, subtractive manufacturing methods have limited geometries available for creating the article.

Carbon materials, such as graphite or coke, can be extremely difficult materials to use in forming articles using a binder jetting technique. Improvements are desired for making carbon articles by three-dimensional printing, especially those improvements which would readily form near net shape carbon articles from a binder jetting technique.

WO 2009/017648 A1 discloses nanoparticle suspensions for use in the three-dimensional printing process. US 2010/018815 A1 discloses a method of manufacturing a carbon-carbon composite brake disc.

US 2010/018815 A1 discloses a method of making a densified carbon article in which a carbon fiber preform is infiltrated with pitch.

JOOHO MOON ET AL: "Fabrication of functionally graded reaction infiltrated SiC-Si composite by three-dimensional printing (3DP(TM)) process",MATERIALS SCIENCE AND ENGINEERING: A, vol. 298, no. 1-2, 1 January 2001 (2001-01-01), pages 110-119, AMSTERDAM, NL, discloses a method of making a SiC/Si body using 3D printing-Amorphous carbon granulates with a size of 45-106 microns are layerwise printed. The printed layers are injected with a furan binder solution. The printed article is cured at 80°C and carbonised at 520°C. Finally the body is infiltrated with liquid Si at 1450°C.

### Summary of the Invention

The present invention provides methods for making a densified carbon article according to claims 1 and 9. Further embodiments of the methods are described in the respective dependent claims.

### Description of Preferred Embodiments

In this section, some preferred embodiments of the present invention are described in detail sufficient for one skilled in the art to practice the present invention without undue experimentation. It is to be understood, however, that the fact that a limited number of preferred embodiments are described herein does not in any way limit the scope of the present invention as set forth in the claims. It is to be understood that whenever a range of values is described herein or in the claims that the range includes the end points and every point therebetween as if each and every such point had been expressly described. Unless otherwise stated, the word "about" as used herein is to be construed as meaning the normal measuring and/or fabrication limitations related to the value which the word "about" modifies. Unless expressly stated otherwise, the term "embodiment" is used herein to mean an embodiment of the present invention.

The basic three-dimensional printing process was developed in the 1990's at the Massachusetts Institute of Technology and is described in several United States patents, including the following United States patents: 5,490,882 to Sachs et al., 5,490,962 to Cima et al., 5,518,680 to Cima et al., 5,660,621 to Bredt et al., 5,775,402 to Sachs et al., 5,807,437 to Sachs et al., 5,814,161 to Sachs et al., 5,851,465 to Bredt, 5,869,170 to Cima et al., 5,940,674 to Sachs et al., 6,036,777 to Sachs et al., 6,070,973 to Sachs et al., 6,109,332 to Sachs et al., 6,112,804 to Sachs et al., 6,139,574 to Vacanti et al., 6,146,567 to Sachs et al., 6,176,874 to Vacanti et al., 6,197,575 to Griffith et al., 6,280,771 to Monkhouse et al., 6,354,361 to Sachs et al., 6,397,722 to Sachs et al., 6,454,811 to Sherwood et al., 6,471,992 to Yoo et al., 6,508,980 to Sachs et al., 6,514,518 to Monkhouse et al., 6,530,958 to Cima et al., 6,596,224 to Sachs et al., 6,629,559 to Sachs et al., 6,945,638 to Teung et al., 7,077,334 to Sachs et al., 7,250,134 to Sachs et al., 7,276,252 to Payumo et al., 7,300,668 to Pryce et al., 7,815,826 to Serdy et al., 7,820,201 to Pryce et al., 7,875,290 to Payumo et al., 7,931,914 to Pryce et al., 8,088,415 to Wang et al., 8,211,226 to Bredt et al., and 8,465,777 to Wang et al.

In essence, three-dimensional printing involves the spreading of a layer of a particulate material and then selectively inkjet-printing a fluid onto that layer to cause selected portions of the particulate layer to bind together. This sequence is repeated for additional layers until the desired part has been constructed. The material making up the particulate layer is often referred as the "build material" or the "build material powder" and the jetted fluid is often referred to as a "binder," or in some cases, an "activator." During the process, the portions of the powder layers which are not bonded together with the binder form a bed of supporting powder around the article or articles which are being made, i.e. a "powder bed" or "build bed."

Post-build processing of the three-dimensionally printed article, i.e., the powder version of the article, is often required in order to strengthen and/or densify the part. Often, the first post-processing step will be to heat the powder version of the article while it is still supported by the powder bed to cure the binder, followed by a second step of removing the powder version of the article from the powder bed, and a third step of heat treating the powder version of the article to sinter together the powder particles of the powder version or to affect changes in the binder.

### Carbon Powder Printing

A carbon powder is provided in quantities sufficient to produce the article or articles desired, taking into account the three- dimensional printing machine that is to be used and the size of the powder bed that will surround the powder version of the article. The first layer of carbon powder is spread onto a vertically indexible platform. An image or pattern corresponding to a first layer of the article or articles to be built is imparted to this layer by inkjet printing binder onto this layer or one or more additional layers may be deposited before the first pattern is imparted. The process of depositing a powder layer followed by imparting an additional image which corresponds to an additional slice of the article or article is continued until the powder version of the article or articles are completed. For conciseness, the powder version of an article is often referred to herein as the "printed article".

The binder requires curing in order to provide the printed article with strength sufficient for handling, a curing process is conducted on the printed article. The printed article is subsequently removed from the powder bed and cleaned of all unwanted adhering or captured powder. The printed article is further heat treated to cure the binder and possibly heat treated to carbonize or graphitize the printed article. Curing The Printed Article

The heating step involves heating the printed article to a temperature and for a time sufficient to cure the binder. In many embodiments, heating to a temperature above 160 C for at least about 60 minutes is often sufficient to cure many organic polymeric binders. The time and temperature required to cure the binder will vary depending on the composition of the particular binder used and is generally well understood by those skilled in the art. The step of curing the binder may be performed in an inert, non-reactive atmosphere, such as argon or nitrogen. Often of the cure temperatures for many organic binders are low enough that the curing step may take place in air without significantly affecting the carbon particles of the printed article. In general, the lower the cure temperature the longer the time required to cure the binder to a degree that the article exhibit physical properties such that it can be handled without significant damage or deformation to the article. Upon curing of the binder the process yields a cured printed article. The cured printed article typically contains less than about 5% binder by weight and preferably less than about 3% binder by weight. In some embodiments, the cured printed article may have a binder content ranging from about 1% to about 5% by weight. This minimal amount of binder used to form near-net shape carbon printed articles significantly reduces material waste and improves the economics and efficiency of producing carbon articles. This is an advancement over many other carbon forming techniques that use significantly higher binder contents to form bulk shapes and are then machined to desired shapes. In certain embodiments the density of the cured printed article, i.e., green density, may range from 0.5 g/cc to 1.2 g/cc, in some embodiments, from about 0.75 g/cc to about 0.9 g/cc.

The heat treating steps, especially for carbonization and/or graphitization, are preferably done in a controlled atmosphere which essentially excludes the presence of air or oxygen. The atmosphere may be any atmosphere which is suitable for heat treating carbon, e.g. argon, nitrogen, etc. In some embodiments the atmosphere may be substantially inert, nonreactive atmosphere. During the heating of the printed article or articles, accommodations may be made for the carbonization or graphitization of the printed article or articles.

### Printed Article Carbonization

In some embodiments, further heat treating of the cured printed article may be optionally performed to carbonize one or more materials in the cured printed article to produce a carbonized printed article. The term "carbonization" refers to the conversion of organic materials/substances into carbon or carbon containing residue by pyrolysis or destructive distillation. A carbonization step may include heating the cured printed article to a temperature of at least 500 °C, preferably at least about 700 °C. In some embodiments, depending on the composition of the carbon powder material used to produce the printed article, carbonization temperatures may range from 500 °C to 900 °C. The carbonization step is preferable conducted in an inert atmosphere, or an atmosphere with insubstantial amounts of air or oxygen. The time required for carbonization is variable depending on the composition of the carbon material and the size and shape of the printed carbon article. In many embodiments, holding the printed article at carbonization temperatures for 1 to 2 hours is typically sufficient to produce a carbonized printed article. In certain embodiments, the density of the carbonized printed article may range from about 0.5 g/cc to about 1.2 g/cc, in some embodiments from about 0.75 g/cc to about 0.9 g/cc.

If the binder utilized to form the printed carbon article is carbonizable and the carbon powder used in the printing steps are either carbonizable or already carbonized, the carbonization step will produce a near net shape carbonized printed article. This is a significant improvement over the primary way to form carbonized shaped articles which is to start with the a solid block of the desired carbon material and machine away the material to form the desired shape. This subtractive method produces a significant amount of material waste, upwards of 75% waste for some parts, and is limited to certain geometries. By printing the desired geometry with a carbonizable or carbonized carbon powder using a carbonizable binder, followed by carbonization of the printed article, a near net shape carbonized printed article is produced with substantially no lost carbon material and can be made in virtually limitless geometric configurations.

### Printed Article Graphitization

Still further, the printed carbon article may be cured as described above and heated to graphitization temperatures of at least 2500 °C, preferably of at least about 3000 °C. The time required for graphitization is variable depending on the carbon powder material and the size and shape of the printed carbon article. In many embodiments, holding the printed carbon article at graphitization temperatures for 1 to 2 hours is sufficient to produce a graphitized printed article.

The step of graphitization provides the ability to print a carbon article using a non-graphitic carbon powder and binder, and subsequently graphitize the printed article to directly produce a near net shape graphitic printed article, provided that the starting non-graphitic carbon powder is at least in part in a form that can be graphitized. Similarly, a graphite or graphitic carbon powder may be used to form a printed article, followed by subsequent graphitization of the binder to produce a near net shape graphitic printed article. These methods for forming a graphitic article are a significant improvement over the traditional methods or forming graphitic articles that rely on machining graphite to produce the desired part. The subtractive machining method produces a significant amount of wasted graphite material and is limited to certain geometries. By printing the desired geometry with the carbon powder, followed by graphitization, a near net shape graphitic printed article is produced with very little lost graphitic material and can be formed in virtually limitless geometric configurations. In certain embodiments the density of the graphitized printed article may range from about 0.75 g/cc to about 1.1 g/cc. In additional embodiments, the density of the graphitized printed article may range from about 0.9 g/cc to about 1.1 g/cc.

### Carbon Powder Sintering

Depending on the carbon powder used to form the printed article, the composition of the carbon particles of the carbon powder will typically determine whether the carbon particles will soften upon heating to elevated temperatures. Often carbon particles typically contain a certain amount of organic volatile matter. As the particles are heated the carbon particles begin to soften as organic volatile matter is released. In general, the higher the volatile matter content of the carbon powder, the greater degree of softening of the carbon powder upon heating. The softening of the carbon particles allow for adjacent carbon particles to sinter together. Carbon powders that are graphitic or have been graphitized have typically already been heat treated to graphitization temperatures and have already lost or substantially reduced any remaining organic volatile matter in the carbon particles. Accordingly, graphitized carbon particles of a printed article printed from graphitized carbon powder are not expected to soften or sinter together to an appreciable degree between adjacent graphitized carbon particles. For example, if the carbon powder does not soften upon heating, little to no sintering is expected to occur with adjacent carbon particles upon heating of the printing article. Many graphite or graphitic materials do not soften to an appreciable degree when exposed to graphitization temperatures, and thus do not sinter significantly upon heating to graphitization temperatures. Conversely, carbon powders that have appreciable amount of organic volatile matter will soften upon heating to carbonization or graphitization temperatures and will sinter together to some degree when heated.

### Carbon Powder

As used herein, "carbon powder" in its singular or plural forms refers to powdered forms of natural graphite, synthetic graphite, glassy carbon, amorphous carbon, coal, petroleum coke or petroleum pitch, since these have a higher carbon content than organic matter content. Petroleum cokes and pitches may include green, carbonized, or graphitized forms.

Certain properties of the carbon powder affect the ability to print the printed article. These properties include the average particle size, the particle size distribution, and the shape of the particles of the carbon powder.

With respect to the average particle size, the average particle size of the powder ranges from 20 micron to 150 microns; and in some embodiments preferably it ranges from 20 microns to 75 microns. In some embodiments, the particle size distribution preferably exhibits a distribution in which greater than about 80% of the particles exhibit a size within 20% of the average particle size. In further embodiments the distribution of particle sizes follow a Gaussian type distribution where about 95% of the particles exhibit a particle size within 20% of the average particle size. In additional embodiments, the particle size distribution may exhibit a d50 of about 75 microns, d10 of 45 microns, and a d90 of 150 microns. The powder distribution should contain no particles having a size which is greater than the layer thickness that is to be used in the three-dimensional printing process, and more preferably no greater than half the layer thickness used in the three dimensional printing process.

The shape of the carbon particles in the carbon powder is also an important variable for the three dimensional printing of carbon articles. In general, it is preferred that the particles be relatively smooth and relatively spherical. Particles that have extremely sharp edges and exhibit extreme elongation along one liner axis are typically not desired.

### Binder

The binders used in the inkjet printing step may include a variety of binder materials. Importantly the binders must be able to be applied by the inject mechanism used by the printing equipment. Physical properties of the binder composition can typically be adjusted with appropriate solvents and surfactants to meet the physical requirements of the particular inkjet head or mechanism being used. The binders used in the present invention may be generally grouped into two categories: organic binders and inorganic binders. Organic binders are those binders in which substantially all of the contents of the binder left behind after the curing step, contain material components that will carbonize during the carbonization step. The organic binders may include but are not limited to phenols, furan, starch, sugar, polyvinylpyrolydine, and other similar organic binders. Inorganic binders are those binders that contain materials that will not carbonize upon heating to carbonization temperatures. The inorganic binders may include, but are not limited to, sodium silicate, and other suitable inorganic binders. Inorganic binders may be suitable if the inorganic material content is of little or no importance or has no significant negative effect on the intended use of the final printed article.

Optionally, the binders may include nanoparticle additives. The additive and binder combination needs to exhibit properties that are suitable for the ink jetting mechanism to apply the binder and additive during the printing process. Preferably, the nanoparticle additives may include carbon containing nanoparticles such as fullerenes, nanotubes, nanoparticles, and other similar carbon containing nanoparticles. Further, pitch material may be dissolved in appropriate organic solvents and used as a carbon additive in the binder. In some embodiments, pitch maybe used as a binder for binding the carbon particles together in the printing process.

### Depositing Carbon Powder

The powders may be deposited as layers using conventional depositing and spreading mechanisms. In some embodiments, a powder dispenser having a beveled foot member in conjunction with a counter-rotating roller to smooth out the powder into a uniform layer may be used. The roller and the powder dispenser may be supported by a common carriage or by separate carriages for moving them across the area on which the powder layer is to be spread.

Depending upon variables such as the size, shape, and density of the particles in the carbon powder, the type and amount of binder used during printing, printed articles may exhibit a printed density ranging from about 0.5 g/cc to about 1.2 g/cc, in some embodiments from about 0.75 g/cc to about 0.9 g/cc. In further embodiments, printed articles exhibit a printed density greater than about 0.7 g/cc, in other embodiments greater than about 0.9 g/cc, in still other embodiments greater than about 1.0 g/cc.

### Pitch Infiltration

To further increase the density of the printed carbon articles, the printed carbon articles undergo a pitch infiltration step. The printed carbon article needs to have sufficient strength to allow for the pitch infiltration process. Pitch infiltration may be performed on cured printed articles, carbonized printed articles, or graphitized printed articles. Importantly the printed article, in any state, must have sufficient strength to substantially preserve the printed shape during the pitch infiltration process.

In an embodiment, the pitch for infiltrating the printed carbon article is heated to a point in which the pitch softens sufficiently to allow the pitch material to enter and infiltrate the open voids or porosity of the printed article. The pitch softening temperature can vary depending on the particular pitch material being used and is easily determined by those skilled in the art. Typically many pitches will begin to soften at temperatures ranging from about 90 °C to about 130 °C. Preferably, the printed article is preheated before pitch infiltration, more preferably the printed article is preheated to a temperature near the pitch softening temperature, and still more preferably the printed article is preheated above the pitch softening temperature. Pitch infiltration may be performed by impregnating the printed carbon article utilizing vacuum impregnation techniques, pressure infiltration techniques, or by capillary action into the open porosity of the printed carbon article. Importantly, strength of the printed article must be sufficient to withstand the force applied to the printed article during pitch infiltration. Suitable pitch materials include petroleum pitch and coal tar pitch. In certain embodiments, the pitch material soften at a temperature ranging from about 90 °C to about 130 °C.

The pitch infiltrated printed article may be further heated treated to carbonization and/or graphitization temperatures as described above. Optionally, the pitch impregnation step and heat treating steps may be repeated several times if desired. In certain embodiments, after carbonization, the carbon yield of the pitch infiltration step may range from about 40% to about 70%, in some embodiments from about 43% to about 68%. In some embodiments, the pitch impregnation step and heat treating steps may be performed from 1 to about 20 times.

Using the methods described above, multiple variations of near net shape carbon composite articles can be produced and tailored for specific applications. By selection of the starting carbon powder and binder, varying degrees of graphitic carbon articles can be produced. For example, utilizing calcined petroleum coke for the carbon powder, an organic binder such as a phenolic binder, and pitch infiltration with coal tar pitch produces a near net shape, highly graphitic printed article when heat treated to graphitization temperatures. This is a significant improvement over the typical methods for making highly graphitic articles which produce significant waste material and are limited in the geometries that can be produced.

Additionally, when starting with graphitized coke particles to form the printed carbon article, the process of curing, pitch infiltration and final graphitization results in very minimal or even no shrinkage. The minimization of shrinkage is due to the fact that the graphitized coke particles that form the printed article have already been thermally heat treated to a temperature equal to or greater than the re-graphitization temperature used after the infiltration process. In some embodiments, this shrinkage is less that about 3%, preferably less that about 1% and more preferably less than about 0.5%. This allows for the production of near net shape densified graphite articles that have very little distortion or change in geometry when compared to the original printed carbon article geometry, thereby minimizing or eliminating the need for any machining processes.

In other embodiments, printed articles may be specially designed to provide graphitic regions and non-graphitic regions. For example, a carbon powder that will not graphitize significantly may used with an organic binder to form a printed article. The non-graphitized printed article is then infiltrated with a graphitizable pitch, such as coal tar pitch. Upon heating to graphitization temperatures, the carbon powder used to produce the printed article does not graphitize significantly while the impregnated pitch forms regions that are highly graphitic. In this way, highly conductive or insulating pathways may be engineered in the printing of the printed article.

The density of pitch infiltrated printed articles may range depending upon a variety of variables. The size and density of the carbon material as well as the geometry and design of the printed article. In embodiments, the density of the pitch infiltrated printed article may be above 1.5 g/cc, in other embodiments above about 1.7 g/cc, in still other embodiments above about 2.0 g/cc. In some embodiments the density may range from 1.5 g/cc to 2.2 g/cc, in other embodiments it may range from about 1.7 g/cc to 2.2 g/cc, in still other embodiments from about 1.9 to about 2.0 g/cc.

## Claims

1. A method for making a densified carbon article comprising the steps of:
(a) providing a carbon powder, wherein the carbon powder is selected from the group consisting of natural graphite, synthetic graphite, glassy carbon, amorphous carbon, coal, petroleum coke, or petroleum pitch, and wherein the carbon powder has an average particle size ranging from 20 microns to 150 microns;
(b) depositing a layer of the carbon powder;
(c) ink-jet depositing a binder onto the layer in a pattern that corresponds to a slice of the article;
(d) repeating the steps (b) and (c) for additional layers of the carbon powder and additional patterns, each of which additional patterns corresponds to an additional slice of the article, until a powder version of the article is completed;
(e) curing the powder version of the article at a temperature at which at least a portion of the binder cures to provide a cured printed article; and
(f) infiltrating the cured printed article with pitch to provide an infiltrated printed article.

2. The method of claim 1, wherein the binder is an organic binder.

3. The method of claim 1, wherein the density of the cured printed article ranges from 0.5 g/cc to 1.2 g/cc.

4. The method of claim 1, wherein the pitch is a petroleum pitch.

5. The method of claim 1, wherein the pitch is a coal tar pitch.

6. The method of claim 1, further comprising the step of heating the infiltrated printed article to a temperature sufficient to graphitize at least a portion of the pitch.

7. The method of claim 6, wherein the step of heating the infiltrated printed article comprises heating to at least 2500 °C.

8. The method of claim 1, wherein the density of the infiltrated printed article ranges from 1.5 g/cc to 2.2 g/cc.

9. A method for making a densified carbon article comprising the steps of:
(a) providing a carbon powder, wherein the carbon powder is selected from the group consisting of natural graphite, synthetic graphite, glassy carbon, amorphous carbon, coal, petroleum coke, or petroleum pitch, and wherein the carbon powder has an average particle size ranging from 20 microns to 150 microns;
(b) depositing a layer of the powder;
(c) ink-jet depositing a binder onto the layer in a pattern that corresponds to a slice of the article;
(d) repeating the steps (b) and (c) for additional layers of the powder and additional patterns, each of which additional patterns corresponds to an additional slice of the article, until a powder version of the article is completed;
(e) curing the powder version of the article at a temperature at which at least a portion of the binder cures to provide a cured printed article;
(f) carbonizing the cured printed article or graphitizing the cured printed article, wherein the graphitizing is performed at a temperature of at least 2500 °C ; and
(g) infiltrating the carbonized printed article or the graphitized printed article with pitch to provide an infiltrated printed article.

10. The method of claim 9, wherein the carbonizing is performed at a temperature ranging from 500 °C to 900 °C.

11. The method of claim 9, wherein, when carbonising, the binder is an organic binder that is carbonizable and the carbon powder is carbonisable or already carbonised, the carbonisation resulting in a near net shape carbonised printed article.

12. The method of claim 9, wherein, when graphitising, the carbon powder is non-graphitic powder, wherein the non-graphitic powder is at least in part in a form that can be graphitised, the graphitising directly producing a near net shape graphitic printed article.

## Patentansprüche

1. Verfahren zum Herstellen eines verdichteten Kohlenstoffartikels, aufweisend die folgenden Schritte:
(a) Bereitstellen eines Kohlenstoffpulvers, wobei das Kohlenstoffpulver aus der Gruppe bestehend aus natürlichem Graphit, synthetischem Graphit, Glaskohlenstoff, amorphem Kohlenstoff, Kohle, Petrolkoks oder Petrolpech ausgewählt wird, und wobei das Kohlenstoffpulver eine durchschnittliche Partikelgröße im Bereich von 20 Mikrometer bis 150 Mikrometer hat,
(b) Ablegen einer Schicht des Kohlenstoffpulvers,
(c) Tintenstrahl-Ausgeben eines Bindemittels auf die Schicht in einem Muster, das einem Schnitt des Artikels entspricht,
(d) Wiederholen der Schritte (b) und (c) für zusätzliche Schichten des Kohlenstoffpulvers und zusätzliche Muster, wobei jedes der zusätzlichen Muster einem zusätzlichen Schnitt des Artikels entspricht, bis eine Pulverversion des Artikels fertiggestellt ist;
(e) Aushärten der Pulverversion des Artikels bei einer Temperatur, bei der mindestens ein Teil des Bindemittels aushärtet, um einen ausgehärteten gedruckten Artikel zu erhalten; und
(f) Infiltrieren des ausgehärteten gedruckten Artikels mit Pech, um einen infiltrierten gedruckten Artikel zu erhalten.

2. Verfahren gemäß Anspruch 1, wobei das Bindemittel ein organisches Bindemittel ist.

3. Verfahren gemäß Anspruch 1, wobei die Dichte des ausgehärteten gedruckten Artikels im Bereich von 0,5 g/cm³ bis 1,2 g/cm³ liegt.

4. Verfahren gemäß Anspruch 1, wobei das Pech ein Petrolpech ist.

5. Verfahren gemäß Anspruch 1, wobei das Pech ein Steinkohleteerpech ist.

6. Verfahren gemäß Anspruch 1, ferner aufweisend den Schritt des Erhitzens des infiltrierten, gedruckten Artikels auf eine Temperatur, die ausreicht, um zumindest einen Teil des Pechs zu graphitieren.

7. Verfahren gemäß Anspruch 6, wobei der Schritt des Erhitzens des infiltrierten gedruckten Artikels ein Erhitzen auf mindestens 2500°C aufweist.

8. Verfahren gemäß Anspruch 1, wobei die Dichte des infiltrierten gedruckten Artikels im Bereich von 1,5 g/cm³ bis 2,2 g/cm³ liegt.

9. Verfahren zum Herstellen eines verdichteten Kohlenstoffartikels, aufweisend die folgenden Schritte:
(a) Bereitstellen eines Kohlenstoffpulvers, wobei das Kohlenstoffpulver aus der Gruppe bestehend aus natürlichem Graphit, synthetischem Graphit, Glaskohlenstoff, amorphem Kohlenstoff, Kohle, Petrolkoks oder Petrolpech ausgewählt wird, und wobei das Kohlenstoffpulver eine durchschnittliche Partikelgröße im Bereich von 20 Mikrometer bis 150 Mikrometer hat,
(b) Ablegen einer Schicht des Pulvers,
(c) Tintenstrahl-Ausgeben eines Bindemittels auf die Schicht in einem Muster, das einem Schnitt des Artikels entspricht,
(d) Wiederholen der Schritte (b) und (c) für zusätzliche Schichten des Pulvers und zusätzliche Muster, wobei jedes der zusätzlichen Muster einem zusätzlichen Schnitt des Artikels entspricht, bis eine Pulverversion des Artikels fertiggestellt ist;
(e) Aushärten der Pulverversion des Artikels bei einer Temperatur, bei der mindestens ein Teil des Bindemittels aushärtet, um einen ausgehärteten gedruckten Artikel zu erhalten;
(f) Karbonisieren des ausgehärteten gedruckten Artikels oder Graphitieren des ausgehärteten gedruckten Artikels, wobei das Graphitieren bei einer Temperatur von mindestens 2500°C durchgeführt wird; und
(g) Infiltrieren des karbonisierten gedruckten Artikels oder des graphitierten gedruckten Artikels mit Pech, um einen infiltrierten gedruckten Artikel zu erhalten.

10. Verfahren gemäß Anspruch 9, wobei das Karbonisieren bei einer Temperatur im Bereich von 500°C bis 900°C durchgeführt wird.

11. Verfahren gemäß Anspruch 9, wobei, beim Karbonisieren, das Bindemittel ein organisches Bindemittel ist, das karbonisierbar ist, und das Kohlenstoffpulver karbonisierbar oder bereits karbonisiert ist, wobei das Karbonisieren zu einem endkonturnahen karbonisierten gedruckten Artikel führt.

12. Verfahren gemäß Anspruch 9, wobei, beim Graphitieren, das Kohlenstoffpulver ein nicht-graphitisches Pulver ist, wobei das nicht-graphitische Pulver zumindest teilweise in einer Form vorliegt, die graphitiert werden kann, wobei das Graphitieren direkt einen endkonturnahen graphitischen gedruckten Artikel erzeugt.

## Revendications

1. Procédé de fabrication d'un article en carbone densifié, comprenant les étapes suivantes consistant à :
(a) fournir une poudre de carbone, la poudre de carbone étant choisie dans le groupe constitué par le graphite naturel, le graphite synthétique, le carbone vitreux, le carbone amorphe, le charbon, le coke de pétrole ou le brai de pétrole, et la poudre de carbone ayant une taille moyenne de particules allant de 20 micromètres à 150 micromètres ;
(b) déposer une couche de la poudre de carbone ;
(c) déposer par jet d'encre un liant sur la couche selon un motif qui correspond à une tranche de l'article ;
(d) répéter les étapes (b) et (c) pour des couches supplémentaires de la poudre de carbone et des motifs supplémentaires, chacun des motifs supplémentaires correspondant à une tranche supplémentaire de l'article, jusqu'à ce qu'une version en poudre de l'article soit terminée ;
e) durcir la version en poudre de l'article à une température à laquelle au moins une partie du liant durcit pour réaliser un article imprimé durci ; et
(f) infiltrer l'article imprimé durci avec du brai pour obtenir un article imprimé infiltré.

2. Procédé selon la revendication 1, dans lequel le liant est un liant organique.

3. Procédé selon la revendication 1, dans lequel la densité de l'article imprimé durci est dans une plage de 0,5 g/cc à 1,2 g/cc.

4. Procédé selon la revendication 1, dans lequel le brai est un brai de pétrole.

5. Procédé selon la revendication 1, dans lequel le brai est un brai de goudron de houille.

6. Procédé selon la revendication 1, comprenant en outre l'étape consistant à chauffer l'article imprimé infiltré à une température suffisante pour graphitiser au moins une partie du brai.

7. Procédé selon la revendication 6, dans lequel l'étape de chauffage de l'article imprimé infiltré comprend un chauffage à au moins 2500°C.

8. Procédé selon la revendication 1, dans lequel la densité de l'article imprimé infiltré est dans une plage de 1,5 g/cc à 2,2 g/cc.

9. Procédé de fabrication d'un article en carbone densifié, comprenant les étapes suivantes consistant à :
(a) fournir une poudre de carbone, la poudre de carbone étant choisie dans le groupe constitué par le graphite naturel, le graphite synthétique, le carbone vitreux, le carbone amorphe, le charbon, le coke de pétrole ou le brai de pétrole, et la poudre de carbone ayant une taille moyenne de particules allant de 20 micromètres à 150 micromètres ;
(b) déposer une couche de la poudre ;
(c) déposer par jet d'encre un liant sur la couche selon un motif qui correspond à une tranche de l'article ;
(d) répéter les étapes (b) et (c) pour des couches supplémentaires de la poudre de carbone et des motifs supplémentaires, chacun des motifs supplémentaires correspondant à une tranche supplémentaire de l'article, jusqu'à ce qu'une version en poudre de l'article soit terminée ;
(e) durcir la version en poudre de l'article à une température à laquelle au moins une partie du liant durcit pour réaliser un article imprimé durci ;
(f) carboniser l'article imprimé durci ou graphitiser l'article imprimé durci, l'étape consistant à graphitiser étant effectuée à une température d'au moins 2500°C ; et
(g) infiltrer l'article imprimé carbonisé ou l'article imprimé graphitisé avec du brai pour obtenir un article imprimé infiltré.

10. Procédé selon la revendication 9, dans lequel la carbonisation est effectuée à une température dans une plage de 500°C à 900°C.

11. Procédé selon la revendication 9, dans lequel, lors de la carbonisation, le liant est un liant organique qui est carbonisable et la poudre de carbone est carbonisable ou déjà carbonisée, la carbonisation résultant en un article imprimé carbonisé d'une forme quasi définitive.

12. Procédé selon la revendication 9, dans lequel, lors de la graphitisation, la poudre de carbone est une poudre non graphitique, la poudre non graphitique étant au moins en partie sous une forme qui peut être graphitisée, la graphitisation produisant directement un article imprimé graphitique de forme quasi définitive.
